# EUROPEAN PATENT APPLICATION

(11) **EP 1 598 409 A2**
(43) Date of publication of application: **23.11.2005**
(21) Application number: 05010659.0
(22) Date of filing: 17.05.2005
(51) Int. Cl.: C09K 11/79, C09K 11/80, H01J 61/44

(54) **Gas-discharge display apparatus**

(30) Priority: 18.05.2004 JP 2004147648
(71) Applicant: Pioneer Corporation, Tokyo 153-8654 (JP)
(72) Inventor: Akiyama, Kazuma, Nakakoma-gun Yamanashi-ken, 409-3843 (JP); Sugio, Yukihiko, Nakakoma-gun Yamanashi-ken, 409-3843 (JP); Hibino, Yo, Nakakoma-gun Yamanashi-ken, 409-3843 (JP)
(74) Representative: Patentanwälte Kern, Popp, Sajda, v. Bülow & Partner

(57) **Abstract**

A phosphor layer is provided on a back glass substrate (4) placed opposite a front glass substrate (1) with a discharge space in between, and formed in a double-layer structure (7A, 7B) consisting of a first phosphor layer (7A) and a second phosphor layer (7B) having its surface covered by the first phosphor layer (7A). The first phosphor layer (7A) is formed of materials that permit the passing-through of a xenon molecular beam but absorb a xenon resonance line in the vacuum ultraviolet light generated from a discharge gas by means of a discharge, and have a higher resistance to the resonance line than that of the second phosphor layer. The second phosphor layer (7B) is formed of materials that have, as compared with the first phosphor layer (7A), a higher light-emission brightness based on the xenon molecular beam in the vacuum ultraviolet light generated from the discharge gas by means of the discharge.

## Description

### BACKGROUND OF THE INVENTION

This invention relates to the structure of a phosphor layer provided in a gas-discharge display apparatus for generating visible light.

In a typical structure of a plasma display panel (hereinafter referred to as "PDP") which is a type of gas-discharge display apparatus, a pair of opposing substrates is placed on both sides of a discharge space. Row electrode pairs, a dielectric layer covering the row electrode pairs, and a protective layer covering the dielectric layer are formed on the inner face of one of the substrates. Column electrodes, a column-electrode protective layer covering the column electrodes and red-, green- and blue-colored phosphor layers are formed on the inner face of the other substrate. The column electrode extends in a direction at right angles to the row electrode pairs, and discharge cells are formed in matrix form in positions corresponding to the intersections between the row electrode pairs and the column electrodes in the discharge space. The red-, green- and blue-colored phosphor layers are individually formed on the column-electrode protective layer in each discharge cell.

The discharge space is filled with a discharge gas including xenon.

In a PDP of such a structure, an address discharge is produced selectively between one row electrode in the row electrode pair and the column electrode. The address discharge results in the deposition of wall charge on the portion of the dielectric layer facing the discharge cell. In the discharge cells (light-emitting cells) having the deposition of wall charge, a sustaining discharge is caused between the row electrodes of the row electrode pair. Vacuum ultraviolet light is produced from the xenon included in the discharge gas by means of this sustaining discharge. The vacuum ultraviolet light excites the phosphor layers to allow them to emit visible color light, thereby forming an image in accordance with an image signal.

The vacuum ultraviolet light generated from the xenon (Xe) in the discharge gas by means of the sustaining discharge includes a resonance line (147nm), a molecular beam (172nm) and the like.

The vacuum ultraviolet light has high energy. When the phosphor layer is irradiated for a long time with the high-energy vacuum ultraviolet light, deterioration over time such as that caused by brightness degradation occurs in the phosphor layer.

The deterioration over time noticeably occurs in the blue phosphor layer as a result of adding europium to barium, magnesium and aluminum oxides which are typically used for PDPs.

A conventional PDP proposed in order to prevent such deterioration of the phosphor layer includes a phosphor layer of a double-layer structure constituting of a first phosphor layer that is the top layer and converts the resonance line (147nm), a molecular beam (172nm) and the like included in the vacuum ultraviolet light into a radiant beam (250nm to 400nm) of longer wavelength than these, and a second phosphor layer that is the bottom layer and excited by the longer-wavelength radiant beam (250nm to 400nm) to emit visible light.

A conventional PDP of the structure as described above is disclosed in Japanese Patent Laid-open Publication 11-67103, for example.

The conventional PDP emits the visible light for forming an image through the two stages of the excitation and light emission process in the double-layer structure phosphor layer. Hence, this PDP has a high conversion loss and thus is incapable of ensuring sufficient light-emission brightness.

### SUMMARY OF THE INVENTION

An object of the present invention is to solve the problem associated with conventional gas-discharge display apparatuses as described above.

To attain this object, a gas-discharge display apparatus according to the present invention has a pair of opposing substrates placed on either side of a discharge space, phosphor layers provided between the pair of substrates, discharge producing members provided between the pair of substrates for producing a discharge in the discharge space, and a discharge gas including xenon and filling the discharge space. The discharge gas produces vacuumultraviolet light including a xenon molecular beam and a xenon resonance line by means of the discharge initiated between the discharge producing members, and allows the vacuum ultraviolet light to excite the phosphor layers for visible light emission. Each of the phosphor layers is formed in a double-layer structure consisting of a first phosphor layer and a second phosphor layer having its surface covered by the first phosphor layer. The first phosphor layer is formed of materials that permit the passing-through of the xenon molecular beam but absorb the xenon resonance line in the vacuum ultraviolet light generated from the discharge gas by means of the discharge, and have a higher resistance to the resonance line than that of the second phosphor layer. The second phosphor layer is formed of materials that have, as compared with the first phosphor layer, a higher light-emission brightness based on the xenon molecular beam included in the vacuum ultraviolet light produced from the discharge gas by means of the discharge.

A preferred embodiment of the present invention can be described by citing a PDP that has a front glass substrate with row electrode pairs formed thereon and a back glass substrate with column electrodes formed thereon placed opposite the front glass substrate. Discharge cells are formed in a discharge space between the opposing front and back substrates in respective positions each facing an area between opposing row electrodes of the row electrode pair across which a discharge is caused. A phosphor layer is formed in each discharge cell. The discharge space is filled with a discharge gas including xenon. The phosphor layer has a double-layer structure consisting of a first phosphor layer and a second phosphor layer having the surface covered by the first phosphor layer. The first phosphor layer is formed of materials that absorb the resonance line but permit the passing-through of the molecular beam included in the vacuum ultraviolet light produced from the xenon in the discharge gas by means of the discharge, and have a higher resistance to the resonance line than that of the second phosphor layer. The second phosphor layer is formed of materials that absorb both the resonance line and the molecular beam included in the vacuum ultraviolet light produced from the xenon in the discharge gas by means of the discharge and have a higher light-emission brightness based on the molecular beam than that in the first phosphor layer.

In the PDP according to this embodiment, when a discharge is produced across the area between the row electrode pair in each of the discharge cells in the discharge space, the xenon resonance line included in the vacuum ultraviolet light produced from the xenon in the discharge gas filling the discharge space is absorbed by the first phosphor layer, thus exciting the first phosphor layer to produce light emission therefrom.

The xenon molecular beam in the vacuum ultraviolet light passes through the first phosphor layer and does not contribute to the light emission from the first phosphor layer. The xenon molecular beam, however, is absorbed by the second phosphor layer beneath the first phosphor layer, thus exciting the second phosphor layer to initiate light emission therefrom.

At this point, the first phosphor layer has a high resistance to the xenon resonance line in the vacuum ultraviolet light. For this reason, deterioration with time such as that caused by brightness degradation occurs less.

The deficiency in emission brightness due to the passing-trough of the xenon molecular beam in the vacuum ultraviolet light is made up for by the light emission from the second phosphor layer excited by the xenon molecular beam which has passed through the first phosphor layer. The combined light emission from the first phosphor layer and the second phosphor layer make it possible to ensure the degree of brightness required to form the image.

The materials forming the second phosphor layer are susceptible to brightness degradation caused by the vacuum ultraviolet light and therefore deterioration over time occurs easily. However, the resonance line of high energy xenon in the vacuum ultraviolet light is absorbed by the first phosphor layer which has a high resistance to this xenon resonance line, and only the low energy xenon molecular beam is absorbed by the second phosphor layer, resulting in inhibition of the second phosphor layer from suffering the brightness degradation and the like caused by the vacuum ultraviolet light.

These and other objects and features of the present invention will become more apparent from the following detailed description with reference to the accompanying drawings.

### BRIEF DESCRIPTION OF THE DRAWINGS

Fig. 1 is a sectional view illustrating a first embodiment of the present invention.
Fig. 2 is a graph showing the excitation characteristics of phosphor materials individually forming a first phosphor layer and a second phosphor layer in the first embodiment.
Fig. 3 is a diagram illustrating the states of the first phosphor layer and second phosphor layer when partially absorbing and partially permitting the passing-through of vacuum ultraviolet light.
Fig. 4 is a sectional view of a second embodiment according to the present invention.

### DETAILED DESCRIPTION OF THE PREFERRED EMBODIMENTS

### First Embodiment

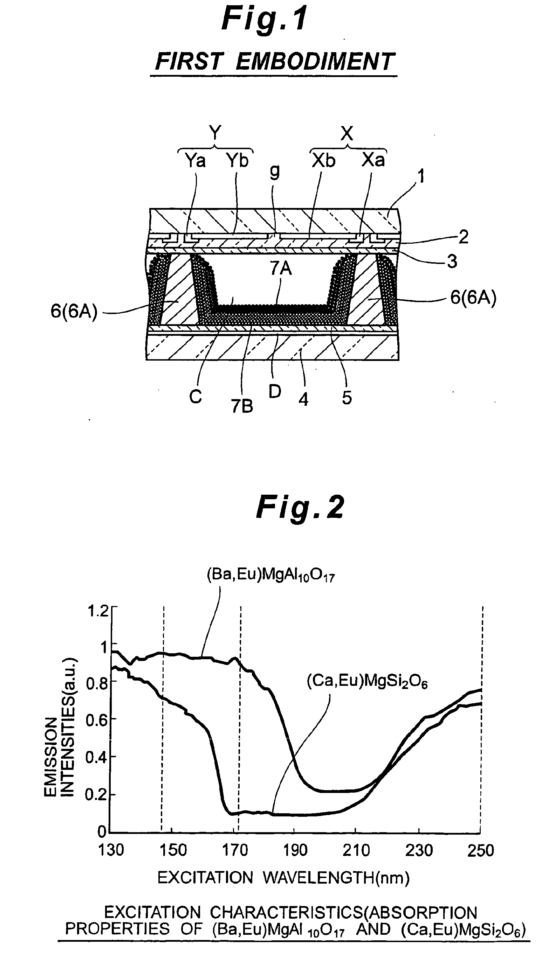

Fig. 1 is a sectional view illustrating the first embodiment when the gas-discharge display apparatus according to the present invention is applied to a PDP.

Fig. 1 shows a sectional view of the structure of an area in the PDP surrounding a discharge cell C, cut through the PDP in the column direction.

In Fig. 1, the PDP has a plurality of row electrode pairs (X, Y) extending in the row direction (the direction at right angles to the right-left direction in Fig. 1) and regularly arranged in the column direction (the right-left direction in Fig. 1) on the rear-facing face of a front glass substrate 1 serving as the display surface.

Row electrodes X and Y in each row electrode pair (X, Y) are each composed of bus electrodes Xa, Ya extending in a bar shape in the row direction, and transparent electrodes Xb, Yb that are lined up at regular intervals along the associated bus electrodes Xa, Ya. The transparent electrodes Xb and the transparent electrodes Yb each extend outward from their associated bus electrodes Xa and Ya toward their counterparts in the row electrode pair to confront each other with a discharge gap g in between.

A dielectric layer 2 is formed on the rear-facing face of the front glass substrate 1 so as to cover the row electrode pairs (X, Y).

The front glass substrate 1 is placed opposite a back glass substrate 4 on both sides of a discharge space. Address electrodes D are arranged in parallel at predetermined intervals in the row direction on the front-facing face of the back glass substrate 4. Each of the address electrodes D extends in the column direction at right angles to the row electrode pair (X, Y) in a position opposite to the paired transparent electrodes Xb and Yb of each row electrode pair (X, Y).

A white column-electrode protective layer (dielectric layer) 5 is provided on the front-facing face of the back glass substrate 4 and covers the address electrodes D.

In turn, a partition wall unit 6 is formed on the column-electrode protective layer 5. The partition wall unit 6 is formed in a substantial grid shape of transverse walls 6A and vertical walls (not shown). The transverse walls 6A extend in the row direction in positions opposite to the bus electrodes Xa and Ya and are arranged in the column direction. The vertical walls (not shown) extend in the column direction in positions opposite to a position lying between adjacent address electrodes D regularly arranged in the column direction and are arranged in the row direction. The partition wall unit 6 partitions the discharge space into areas in matrix form in positions each corresponding to the opposing transparent electrodes Xa and Ya with the discharge gap in between in each row electrode pair (X, Y) to form discharge cells C.

In each discharge cell C, a phosphor layer 7 covers five faces: the side faces of the transverse walls 6A and the vertical walls of the partition wall unit 6 and the face of the portion of the column-electrode protective layer 5 lying between the transverse walls 6A and the vertical walls. The three primary colors, red, green and blue, are individually applied to the phosphor layers 7 such that the red, green and blue colors in the discharge cells C are arranged in order in the row direction. Each of the phosphor layers 7 is formed in a double layer structure consisting of a first phosphor layer 7A and a second phosphor layer 7B with its front-facing face covered by the first phosphor layer 7A which are formed of materials as described later.

The discharge space between the first and second glass substrates 1 and 4 is filled with a discharge gas including xenon.

As shown in Fig. 2, the first phosphor layer 7A is formed of materials that have a high resistance to a xenon resonance line (147nm) in the vacuum ultraviolet light which is generated from xenon (Xe) included in the discharge gas by means of the discharge produced in the discharge cell C, and absorb the Xe resonance line (147nm) but permit the passing-through of an Xe molecular beam (172nm). For example, the first phosphor layer 7A of the blue phosphor layer is formed of an Eu activated silicate phosphor material such as (Ca, Eu)MgSi₂O₆.

The second phosphor layer 7B is formed of materials that have high absorption properties for both the Xe resonance line (147nm) and the Xe molecular beam (172nm) in the vacuumultraviolet light which is generated from the xenon in the discharge gas by means of the discharge produced in the discharge cell C, and have a high emission brightness. For example, the second phosphor layer 7B of the blue phosphor layer is formed of an Eu activated aluminate phosphor material such as (Ba, Eu)MgAl₁₀O₁₇.

Fig. 2 shows the excitation characteristic curves showing the light-emission intensity of (Ca, Eu)MgSi₂O₆ forming the blue first phosphor layer 7A relative to the excitation wavelength of the vacuumultraviolet light, and the light-emission intensity of (Ba, Eu)MgAl₁₀O₁₇ forming the blue second phosphor layer 7B relative to the excitation wavelength of the vacuum ultraviolet light.

As shown in Fig. 2, (Ba, Eu)MgAl₁₀O₁₇ absorbs both an Xe resonance line (147nm) and an Xe molecular beam (172nm) in the vacuumultraviolet light and emits light, whereas (Ca, Eu)MgSi₂O₆ absorbs the Xe resonance line (147nm) and emits light but does not absorb much of the Xe molecular beam (172nm) and emits no light.

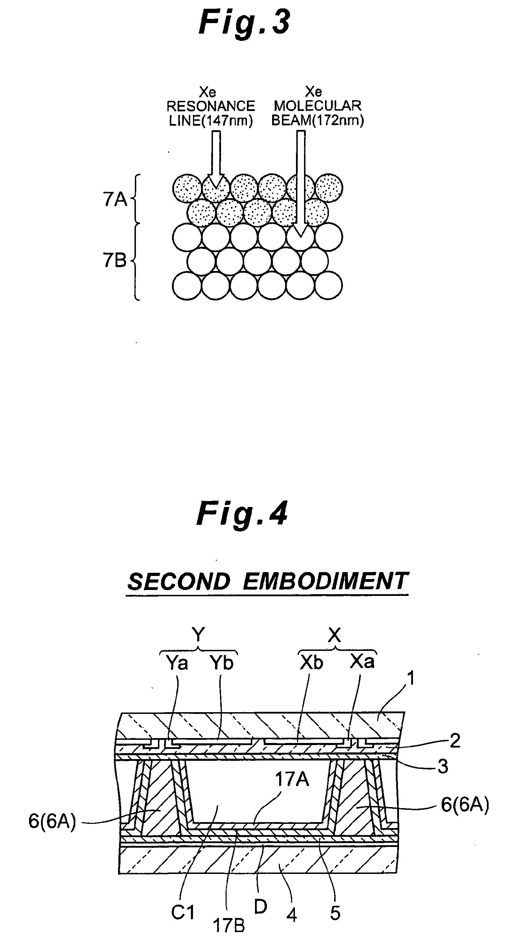

As illustrated in Fig. 3, in the PDP having the phosphor layers of the double layer structure of the first phosphor layer 7A and the second phosphor layer 7B as described above, when a discharge is produced between the opposing transparent electrodes Xb and Yb with the discharge gap g in between in the row electrode pair (X, Y), the Xe resonance line (147nm) in the vacuumultraviolet light generated from the xenon in the discharge gas filling the discharge cell C is absorbed by the first phosphor layer 7A and excites the first phosphor layer 7A to produce light emission.

The Xe molecular beam (172nm) in the vacuum ultraviolet light passes through the first phosphor layer 7A and therefore does not contribute to light emission. However, the Xe molecular beam (172nm) is absorbed by the second phosphor layer 7B provided beneath the first phosphor layer 7Aandexcites the secondphosphor layer 7B to produce light emission.

At this point, because the first phosphor layer 7A has a high resistance to the Xe resonance line (147nm) in the vacuum ultraviolet light, deterioration over time such as that caused by brightness degradation tends to occur less.

The deficiency in the emission brightness due to the passing-through of the Xe molecular beam (172nm) in the vacuum ultraviolet light is made up for by light emission produced from the second phosphor layer 7B excited by the Xe molecular beam (172nm) which has passed through the first phosphor layer 7A. As a result, the light emission from the first phosphor layer 7Aand the second phosphor layer 7B provides the degree of emission brightness required for forming the image.

Further, the materials forming the second phosphor layer 7B are susceptible to brightness degradation caused by the vacuum ultraviolet light and therefore deterioration over time occurs often. However, the high-energy Xe resonance line (147nm) in the vacuum ultraviolet light is absorbed by the first phosphor layer 7A which has a high resistance to this xenon resonance line (147nm), and only the low energy xenonmolecular beam (172nm) is absorbed by the second phosphor layer 7B, resulting in inhibiting the second phosphor layer 7B from suffering brightness degradation and the like caused by the vacuum ultraviolet light.

In this connection, in the case where the first phosphor layer 7A is formed by a screen-printing method, a nozzle coating method or the like using a coating material including phosphor powder, in order to prevent the phosphor powder from causing a diffuse reflection of the Xe molecular beam (172nm) traveling through the first phosphor layer 7A, flat-grained powder, rather than round-grained powder is preferably used as the phosphor powder for forming the first phosphor layer 7A.

### Second Embodiment

Fig. 4 is a sectional view illustrating a second embodiment when the gas-discharge display apparatus according to the present invention is applied to a PDP.

Fig. 4 shows a sectional view of the structure of an area of the PDP surrounding a discharge cell, cut through the PDP in the column direction. The first and second embodiments are the same except for the structure of the phosphor layer. The same structural components are designated by the same reference numerals.

In Fig. 4, in each discharge cell C1, a phosphor layer covers five faces: the side faces of the transverse walls 6A and the vertical walls of the partition wall unit 6 and the face of the portion of the column-electrode protective layer 5 lying between the transverse walls 6A and the vertical walls. The three primary colors, red, green and blue, are individually applied to the phosphor layers such that the red, green and blue colors in the discharge cells C1 are arranged in order in the row direction. Each of the phosphor layer is constituted in a double layer structure consisting of a first phosphor layer 17A and a second phosphor layer 17B with its front-facing face covered by the first phosphor layer 17A, which are formed of materials as described later.

The first phosphor layer 17A is formed of materials that have a high resistance to the xenon resonance line (147nm) in the vacuum ultraviolet light which is generated from the xenon (Xe) included in the discharge gas by means of the discharge produced in the discharge cell C1, and absorb the Xe resonance line (147nm) but permit the passing-through of the Xe molecular beam (172nm). For example, the first phosphor layer 17A of the blue phosphor layer is formed of an Eu activated silicate phosphor material such as (Ca, Eu)MgSi₂O₆.

The first phosphor layer 17A is formed, in transparent thin film form, of an Eu activated silicate phosphor material or the like by thin-film forming techniques, such as a CVD technique, an electron-beam evaporation technique or a sputtering technique.

The second phosphor layer 17B is formed of materials that have high absorption properties for both the Xe resonance line (147nm) and the Xe molecular beam (172nm) in the vacuum ultraviolet light which is generated from the xenon (Xe) in the discharge gas by means of the discharge produced in the discharge cell C1, and have a high emission brightness. For example, the second phosphor layer 17B of the blue phosphor layer is formed of an Euactivated aluminate phosphor material such as (Ba, Eu)MgAl₁₀O₁₇.

The second phosphor layer 17B is formed, in transparent thin film form, of an Eu activated aluminate phosphor material or the like bythin-film forming techniques, such as a CVD technique, an electron-beam evaporation technique or a sputtering technique.

By forming the first phosphor layer 17A in transparent thin film form, less diffuse reflection of the Xe molecular beam (172nm) occur when the Xe molecular beam (172nm) in the vacuum ultraviolet light travels through the first phosphor layer 17A, which in turn prevents a decrease in the amount of absorption in the second phosphor layer 17B. As a result, the PDP according to the second embodiment is capable of producing light emission with a high brightness.

The above description has been given of the example when the first phosphor layer 17A and the second phosphor layer 17B are both formed in thin film form. However, as in the case of the first embodiment, the second phosphor layer 17B may be formed by methods such as screen-printing, nozzle coating or the like using a coating material including phosphor powder.

## Claims

1. A gas discharge display apparatus having a pair of opposing substrates (1, 4) placed on either side of a discharge space, phosphor layers (7A, 7B) provided between the pair of substrates (1, 4), and discharge producing members (X, Y) provided between the pair of substrates (1, 4) for producing a discharge in the discharge space, the discharge space being filled with a discharge gas that includes xenon and produces vacuum ultraviolet light including a xenon molecular beam and a xenon resonance line by means of the discharge initiated between the discharge producing members and allows the vacuum ultraviolet light to excite the phosphor layers (7A, 7B) for visible light emission, the gas discharge display apparatus **characterized**
**in that** the phosphor layer (7A, 7B) is formed in a double-layer structure of a first phosphor layer (7A) and a second phosphor layer (7B) having its surface covered by the first phosphor layer (7A),
the first phosphor layer (7A) is formed of materials that permit the passing-through of the xenon molecular beam but absorb the xenon resonance line in the vacuumultraviolet light generated from the discharge gas by means of the discharge, and have a higher resistance to the resonance line than that of the second phosphor layer (7B), and
the second phosphor layer (7B) is formed of materials that have, as compared with the first phosphor layer (7A), a higher light-emission brightness based on the xenon molecular beam in the vacuum ultraviolet light generated from the discharge gas by means of the discharge.

2. The apparatus according to claim 1,
wherein the first phosphor layer (7A) is formed of a europium-activated silicate blue phosphor material, and the second phosphor layer (7B) is formed of a europium-activated aluminate blue phosphor material

3. The apparatus according to claim 1 or 2,
wherein a coating material including phosphor powder of flat-shaped particles is coated onto the second phosphor layer (7B) to form the first phosphor layer (7A).

4. The apparatus according to any of claims 1 to 3,
wherein the first phosphor layer (7A) includes a transparent phosphor thin film.

5. The apparatus according to any of claims 1 to 4,
wherein the gas discharge display apparatus is a plasma display panel and the phosphor layers (7A, 7B) of the double structure of the first phosphor layer (7A) and the second phosphor layer (7B) are phosphor layers (7A, 7B) of three primary colors individually formed in unit light emission areas (C) arranged in matrix form in the discharge space.
